# FASCICULE DE BREVET EUROPEEN

(11) **EP 0 362 047 B1**
(45) Date de publication et mention de la délivrance du brevet: **14.12.1994**
(21) Numéro de dépôt: 89402627.7
(22) Date de dépôt: 26.09.1989
(51) Int. Cl.: B60J 7/10

(54) **Bâti de couverture d'une structure de véhicule utilitaire**
Gestell zur Abdeckung eines Lkw-Aufbaues
Covering frame of a commercial vehicle structure

(30) Priorité: 29.09.1988 DE 3833060
(43) Date de publication de la demande: 04.04.1990
(73) Titulaire: S.E.S.R. - SOCIETE EUROPEENNE DE SEMI-REMORQUES, F-75008 Paris (FR)
(72) Inventeur: Franz, Carl, 5600 Wuppertal 1 (DE)
(74) Mandataire: Michelet, Alain

(56) Documents cités:
- EP-A- 0 047 022
- EP-A- 0 088 698
- DE-A- 2 718 674
- DE-U- 7 911 045
- DE-U- 8 803 130

## Description

L'invention concerne un bâti de couverture pour une bâche de recouvrement ou une couverte de toit métallique d'une structure de véhicule utilitaire tel que défine dans le préambule de la revendication 1, ce bâti étant du type divulgué par DE-U-88 03 130.6.

Un bâti de couverture est décrit dans le modèle d'utilité allemand DE-U-79 11 045. Dans ce bâti de couverture, le guidage se compose d'une glissière disposée en supplément au-dessous du montant longitudinal et le poteau intermédiaire est pourvu, à peu près à mi-hauteur, d'une articulation basculante pour pouvoir soulever de la surface de chargement l'attache qui est disposée à l'extrémité inférieure du poteau intermédiaire, ce qui fait que ce dernier peut être librement déplacé dans le guidage. Un chariot à galet est disposé à l'extrémité supérieure du poteau intermédiaire et se déplace dans la glissière de guidage, en y bénéficiant d'un tel jeu qu'il peut être basculé si l'articulation basculante est rabattue.

Dans ce bâti de couverture, il est désavantageux que la glissière de guidage réduise la hauteur de chargement au-dessous du montant longitudinal, que le poteau intermédiaire se compose de nombreuses pièces individuelles relativement compliquées et ne puisse être décroché de son guidage que difficilement.

Un bâti de couverture de ce type est aussi décrit dans le modèle d'utilité allemand DE-U-88 03 130.6. Dans ce bâti de couverture, le guidage se compose d'un espace creux, de section transversale rectangulaire, s'étendant en direction longitudinale du montant, disposant d'une fente sur un côté vertical, par laquelle est insérée une partie crochetante de la tête du poteau intermédiaire. Cette partie est aussi pourvue d'un chariot à galet qui permet de déplacer le poteau dans le guidage.

Cette conception est complexe: il faut incliner le poteau intermédiaire, insérer, puis crocheter sa tête dans le guidage, par la fente située sur le côté. Cette manoeuvre est difficile. En effet, le poteau intermédiaire est lourd pour des manipulations par l'homme, et il est long, ce qui nécessite un certain débattement autour du véhicule. De plus, la fente n'est pas parfaitement visible, compte tenu de la hauteur des montants longitudinaux montés par rapport à la taille de l'homme qui manipule.

L'invention a pour but de créer un bâti de couverture de construction simple, permettant un chargement et un déchargement exempts de toute contrainte et dont les éléments individuels peuvent être montés et démontés facilement.

Ce problème est résolu, selon l'invention, pour un bâti de couverture du type indiqué au début (DE-U-88 03 130.6), par les caractéristiques techniques énoncées dans la revendication 1, avec des poteaux intermédiaires, des éléments de serrage et des entretoises verticales susceptibles d'être accrochés dans et décrochés du guidage, le guidage se composant d'un espace creux s'étendant en direction longitudinale du montant et présentant une section transversale sensiblement circulaire et une fente ouverte vers le bas, l'extrémité supérieure du poteau intermédiaire s'engageant dans la fente située dans l'espace creux et sa tête étant adaptée à la section transversale circulaire, avec un faible jeu.

Dans ce type de bâti, le montant lui-même forme le guidage de la tête du poteau intermédiaire qui peut être pivoté latéralement et déplacé facilement du fait de la section transversale circulaire de l'espace creux.

Si la tête située à l'extrémité supérieure du poteau intermédiaire présente la forme d'une sphère aplatie, dont le diamètre correspond à celui du guidage et dont l'épaisseur aplatie correspond à la largeur de la fente située dans le montant, le poteau intermédiaire ne nécessite que d'être tourné de 90° après le basculement, pour être décroché du guidage.

Dans ce but, la liaison entre la tête et le poteau intermédiaire se compose d'une pièce d'encolure et d'un rebord de vissage contigu, à trous oblongs : cette pièce d'encolure est de préférence à double courbure. Dans la zone de la fente, la pièce d'encolure est adaptée à la largeur de la fente, de façon à pouvoir tourner de 90°.

D'autre part, la tête se compose, à l'extrémité supérieure du poteau intermédiaire, d'un cylindre coulissant de diamètre correspondant au guidage situé dans le montant, cylindre présentant, dans la zone tournée vers la fente située dans le montant, un évidement dans lequel est fixée l'extrémité supérieure du poteau intermédiaire de manière susceptible de pivoter. Un tourillon traverse transversalement le cylindre coulissant, dans la zone de l'évidement, et l'extrémité supérieure du poteau intermédiaire qui est disposée sur le cylindre.

En outre, l'extrémité supérieure du montant intermédiaire présente la forme d'un cône aplati ou d'une pyramide aplatie, dont les aplatissements s'étendent transversalement par rapport à l'axe du cylindre coulissant, la pointe du cône et de la pyramide pouvant alors s'appuyer dans l'évidement formé en conséquence.

Pour éviter que le poteau intermédiaire tombe du cylindre coulissant, lorsqu'il n'est pas soutenu à son extrémité inférieure, l'évidement peut s'élargir dans la zone du cône aplati ou de la pyramide aplatie, transversalement par rapport à l'axe du cylindre coulissant et présenter des épaulements en vue de saisir par le dessous l'extrémité supérieure du poteau intermédiaire.

Le poteau intermédiaire peut être décroché du cylindre coulissant si la pyramide aplatie ou le cône aplati est relié au poteau intermédiaire à l'aide d'une pièce de transition dont l'épaisseur mesurée transversalement à l'axe du cylindre coulissant, tout comme l'épaisseur aplatie du cône ou de la pyramide, observée perpendiculairement, correspond à peu près à la largeur de l'évidement, de sorte qu'il suffit de tourner le poteau intermédiaire de 90° pour pouvoir extraire vers le bas la pyramide aplatie ou le cône aplati, hors de l'évidement.

On empêche toute rotation intempestive du poteau intermédiaire lorsqu'il n'est pas soutenu par le fait que les épaulements de l'évidement qui saisissent par le dessous le cône ou la pyramide présentent des enfoncements adaptés à la face inférieure du cône ou de la pyramide, qui servent à accrocher le poteau intermédiaire s'il est désolidarisé de sa fixation inférieure.

Pour permettre l'extraction par pivotement du poteau intermédiaire, la fente située dans le montant est plus large que l'extrémité du poteau intermédiaire qui traverse la fente; les arêtes latérales de la fente sont alors de préférence disposées de manière asymétrique par rapport à l'axe longitudinal du guidage cylindrique situé dans le montant, vers le côté par lequel le poteau intermédiaire doit être extrait par pivotement. L'extraction par pivotement peut s'effectuer vers l'espace de chargement, mais pas vers l'extérieur.

Pour fixer le poteau intermédiaire après le chargement du véhicule, pendant le trajet, l'extrémité inférieure du poteau intermédiaire peut présenter un verrouillage se composant de préférence d'un étrier situé à l'extrémité inférieure du poteau intermédiaire et d'un ergot de verrouillage s'engageant sur l'étrier et situé dans la zone de la surface de chargement. L'ergot de verrouillage présente un ressort d'encliquetage saisissant l'étrier, afin de fixer ce dernier sans qu'il ne batte dans l'ergot d'encliquetage.

L'ergot de verrouillage et le ressort d'encliquetage peuvent présenter une rampe d'introduction destinée à faciliter l'introduction de l'étrier sous l'argot d'encliquetage. L'étrier peut de plus être arrondi.

Les montants peuvent présenter à leur arête supérieure des logements destinés à accrocher des arceaux et se composant de préférence de fentes s'étendant en direction longitudinale et s'élargissant en allant vers l'intérieur du montant. Les dépôts de crasse sont de cette manière dirigés dans le fente allant en s'élargissant, de sorte que le fonctionnement des arceaux à accrocher demeure garanti.

Les poteaux et les montants peuvent être fabriqués de manière simple en aluminium extrudé ou en matière plastique renforcée par des fibres, de sorte qu'il en résulte une grande liberté dans le choix de la forme de la section transversale et que l'on peu fabriquer simplement les guidages mentionnés des poteaux intermédiaires et les logements destinés aux extrémités d'arceaux ainsi que les chambre creuses supplémentaires destinées à l'allégement du poids..

Les arceaux peuvent se composer d'un profilé creux rectangulaire dans les extrémités duquel sont fixés un crochet en forme de U et une pièce de remplissage. Le côté du crochet en forme de U qui dépasse du profilé rectangulaire peut alors s'accrocher dans la fente située sur l'arête supérieure du montant, tandis que le côté du crochet en forme de U qui s'introduit à l'intérieur du profilé rectangulaire est fixé à l'aide d'une gorge de réception située dans la pièce de remplissage.

Sur la pièce de remplissage, il peut être disposé une languette élastique dépassant du profilé à arceau et s'appuyant sur la nervure tournée vers l'intérieur de la fente de réception en garantissant une fixation de l'arceau interdisant le battement. La pièce de remplissage avec le crochet peut être fixée dans le profilé à arceaux à l'aide d'un boulon traversant transversalement.

Dans le but de pouvoir effectuer un contrôle de douane, le crochet et la pièce de remplissage présentent un orifice de regard vers l'intérieur du profilé à arceau et des butées ayant de préférence le forme de pièces de serrage enfichées ou vissées sur les nervures servent à positionner les arceaux dans la direction longitudinale des fentes sur l'arête supérieure de montants.

Si la structure du véhicule est très longueur, il peut être avantageux de subdiviser les montants longitudinaux et de les assembler à l'aide de tourillons enfichables dans les guidages cylindriques et dans les fentes s'élargissant.Les tourillons enfichables dans les guidages cylindriques présentent de préférence à chaque extrémité un boulon transversal élastique dont l'une des extrémités présente une poignée accessible à travers la fente située sur le guidage cylindrique et dont l'autre extrémité coopère avec un alésage transversal situé dans la paroi du guidage cylindrique.

Le montage des montants est facilité par le fait que les tourillons enfichables dans le guidage cylindrique présentent à leurs extrémités des appendices aplatis de largeur légèrement inférieure à celle de la fente longitudinale inférieure des montants. Si les tourillons sont introduits dans les guidages cylindriques jusqu'à ce que seuls les appendices aplatis ressortent, les montants peuvent être poussés par leurs extrémité sur les appendices aplatis; le tourillon est ensuite introduit dans le guidage cylindrique, jusqu'au verrouillage dans l'alésage transversal.

On obtient une sécurité en rotation des montant entre eux par le fait que le tourillon enfichable dans la fente s'élargissant est susceptible de se déplacer dans le montant voisin, à l'aide d'une goupille transversale passée dans un trou oblong pratiqué dans le montant.

Un chanfreinage extérieur pratiqué sur le montant, pour les bâches de recouvrement, permet d'obtenir une hauteur de chargement intérieure plus grande dans le cas de conteneurs interchangeables ou de véhicules à structure transportées sur des véhicules ferroviaires.

L'invention est expliquée ci-dessous plus en détail, à l'aide d'exemples de réalisation représentés sur le dessins, dans lequel :
- La figure 1: est une représentation en perspective d'une structure de véhicule utilitaire selon l'invention;
- la figure 2: représente une section transversale d'un montant longitudinal et du poteau intermédiaire;
- la figure 3: représente une vue de côté du montant longitudinal et du poteau intermédiaire selon la figure 2;
- la figure 4: représente une section transversale d'un verrouillage du poteau intermédiaire dans la zone de l'arête supérieure de la paroi de bord;
- la figure 5: représente une vue de côté du verrouillage selon la figure 4;
- la figure 6: représente une section transversale d'un montant de toit dans lequel l'arceau est accroché et d'un cylindre coulissant destiné à l'extrémité supérieure du poteau intermédiaire;
- la figure 7: représente une vue de côté du cylindre coulissant avec l'extrémité supérieure du poteau intermédiaire fixée sur ce dernier;
- la figure 8: représente une section transversale d'un autre montant longitudinal avec cylindre coulissant;
- la figure 9: représente une vue de côté du cylindre coulissant selon la figure 8;
- la figure 10: représente une section transversale d'un montant longitudinal contenant l'arceau accroché à l'intérieur;
- la figure 11: représente une section transversale selon la ligne XI-XI de la figure 10;
- la figure 12: représente une section transversale du montant longitudinal selon la figure 10, avec des butées de positionnement destinées aux arceaux;
- la figure 13: représente un tourillon de liaison destiné à la liaison de plusieurs montants longitudinaux;
- la figure 14: est une représentation schématique de deux extrémités de montants longitudinaux reliés ensemble, avec le tourillon de liaison introduit au préalable et
- la figure 15: est une représentation des extrémités de montants longitudinaux correspondant à la figure 13, les tourillons de liaison étant rétractés dans le montant longitudinal gauche.

Une structure 1 de véhicule utilitaire utilisable pour des véhicules routiers et ferroviaires présente un bâti de couverture pour une bâche de recouvrement ou une couverture métallique. Le bâti de couverture se compose de poteaux de coins 3 fixés sur une surface 2 de chargement du véhicule et de montants longitudinaux et transversaux 4,5 fixés sur leurs extrémités supérieures, ainsi que d'au moins un poteau intermédiaire 6,3 disposé, de manière susceptible de se déplacer à son extrémité supérieure dans un guidage situé dans le montant longitudinal 4,5 et susceptible de basculer. Le poteau intermédiaire 6 est réalisé sous la forme de prolongement d'une colonne 7 disposée entre des parois de bord 9 rabattables, tandis que le poteau intermédiaire 8 est directement relié à l'arête supérieure de la paroi de bord 9. Des arceaux 10 sont placés sur les montants longitudinaux 4 et parallèlement aux montants transversaux 5, en vue de constituer un appui d'une bâche de recouvrement ou d'une couverture de toit métallique.

Au lieu d'un poteau intermédiaire, on peut également accrocher à cet emplacement une sangle de serrage.

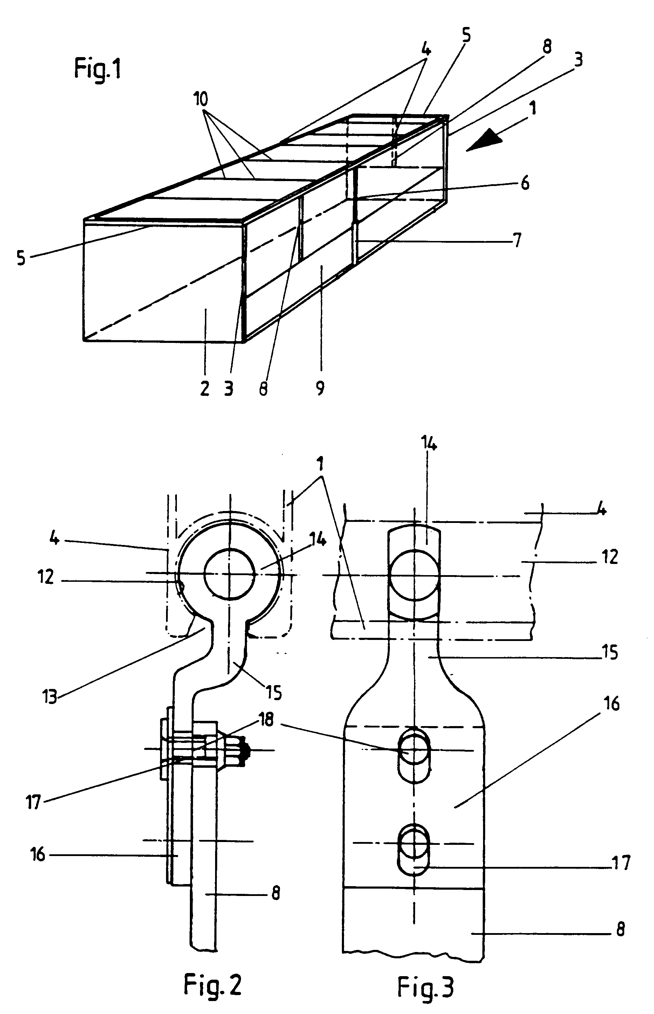

Dans la réalisation des figures 2 et 3, le poteau intermédiaire 6 présente à sont extrémité supérieure une tête ayant la forme d'une sphère aplatie 14, dont le diamètre est adapté au guidage cylindrique 12 situé dans le montant longitudinal 4,6. Le guidage cylindrique 12 est ouvert vers le bas, par une fente 13. La sphère aplatie 14 est reliée à un rebord de vissage 16 par l'intermédiaire d'une pièce d'encolure à double courbure 15. Ce rebord de vissage 16 présente des trous oblongs 17 de façon qu'il puisse être relié de manière réglable, en hauteur, au poteau intermédiaire 8, à l'aide de vis 18.

La largeur de la sphère aplatie 14, ainsi que le diamètre de la pièce d'encolure 15 dans la zone de la fente 13 sont telle que la sphère aplatie 14 peut être décrochée du guidage cylindrique 12, en passant par la fente 13, après une rotation de 90°.

La fente 13 s'élargit de préférence de manière asymétrique par rapport à l'axe longitudinal du guidage cylindrique 12, de sorte que le poteau intermédiaire 6,8 peut pivoter autour de l'axe longitudinal du guidage cylindrique 12. En outre, la sphère aplatie 14 peut être déplacée à volonté dans la direction axiale du guidage cylindrique 12.

Un verrouillage est placé sur l'arête supérieure de la paroi de bord 9, en vue de positionner le poteau intermédiaire 8. Ce verrouillage se compose d'un étrier 19 en forme de U et de section transversale circulaire qui est situé à l'extrémité inférieure du poteau intermédiaire 8 et d'un ergot d'encliquetage 20 fixé par vissage sur la paroi de bord 9. L'ergot d'encliquetage 20 présente à cet effet des alésages 23. L'étrier 19 peut être poussé sous l'ergot d'encliquetage 20 et s'encliquète derrière une saillie de l'ergot d'encliquetage 20. Un ressort d'encliquetage 21 peut servir à éviter tout battement de la liaison et être pourvu, comme l'ergot d'encliquetage 20, d'une rampe d'introduction 22 afin de faciliter l'introduction de l'étrier 19.

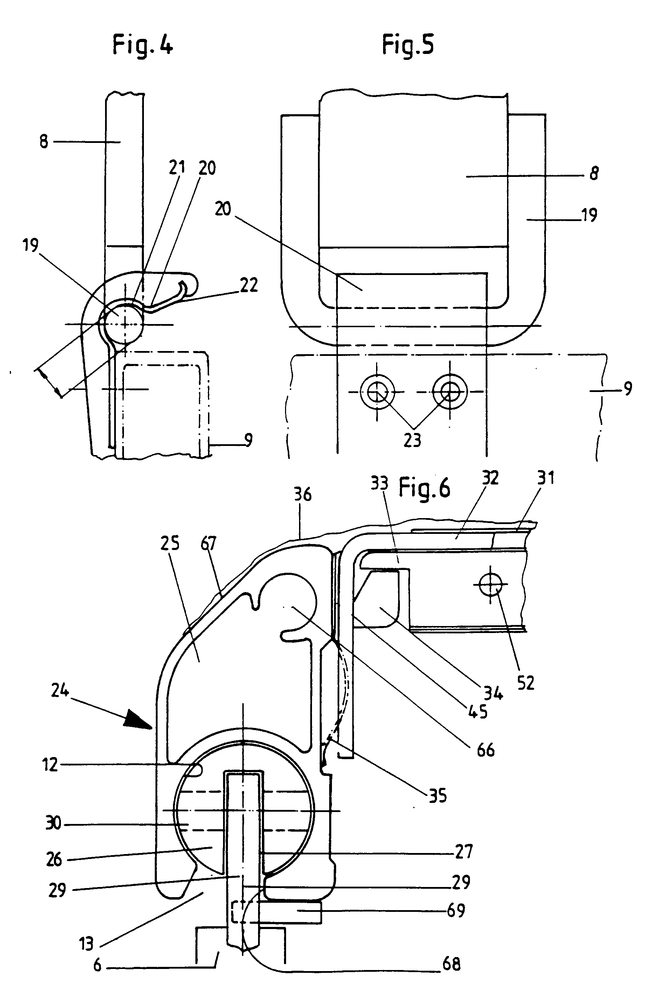

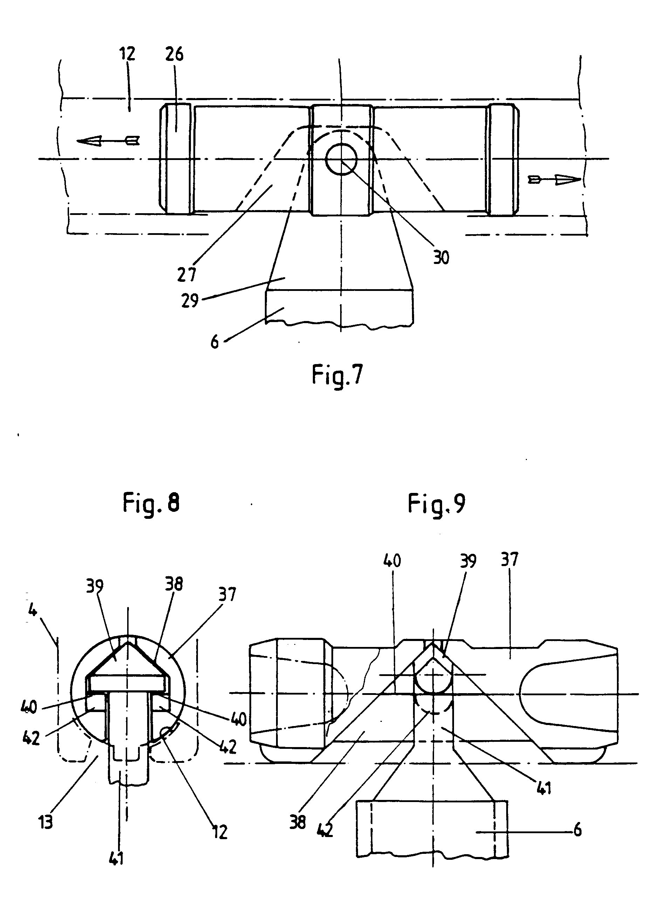

Dans la réalisation selon les figures 6 et 7, la tête située à l'extrémité supérieur du poteau intermédiaire 6 se compose d'un cylindre coulissant 26 dont le diamètre est adapté au guidage cylindrique 12. Dans la zone centrale du cylindre coulissant se trouve un évidement 27 destiné à recevoir une attache 29 faisant partie du poteau intermédiaire 6. La mobilité du poteau intermédiaire 6 est garantie par un tourillon 30 enfiché transversalement dans le cylindre coulissant 26 et l'attache 29.

Le montant longitudinal 24 présente pour des raisons d'allégement du poids une chambre creuse 25. La saillie fendue 34 est réalisée en forme d'étrier en U et fixée au montant 24 à l'aide de rivets ou de vis. La saillie 34 sert à recevoir le côté d'un crochet 32 en forme de U, à l'extrémité d'un arceau 31 réalisé sous la forme de profilé rectangulaire. Le crochet 32 en forme de U est fixé à l'aide d'une pièce de remplissage 33 dans le profilé rectangulaire 31. On obtient une assise exemple de battement dans la saillie fendue 34, à l'aide d'un ressort de serrage 35. Une bâche de recouvrement 36 qui est fixée de manière courante, non représentée, aux parois latérales de la structure du véhicule, s'étend sur les arceaux 31 et le montant longitudinal 24.

Toute rotation du montant 24 ou 43 est empêchée par la surface d'appui 68. Le poteau intermédiaire 6 soutient par son extrémité supérieure 29,41 le montant 24,43. Le couple de rotation en basculement du montant agit en direction du centre de la structure, du fait de l'orientation de son centre de gravité, vers le centre de la structure.

Les efforts longitudinaux se produisant dans les montants longitudinaux 4 et provoqués par exemple par des efforts de freinage sont supportés par les poteaux 6,7, par une butée 69 qui est rigidement reliée au montant 4.

Dans la réalisation des cylindres coulissants 37 selon les figures 8 et 9, il est disposé au centre un évidement 38 s'élargissant dans la zone supérieure et formant par conséquent des épaulements 40. Ces épaulements saisissent par le dessous une tête de l'extrémité supérieure du poteau intermédiaire 6, tête réalisée sous la forme d'une sphère aplatie ou d'une pyramide aplatie 39. La pyramide aplatie 39 est reliée au poteau intermédiaire 6 proprement dit à l'aide d'une pièce de transition 41. Cette pièce de transition 41 est dimensionnée de façon à permettre une rotation de 90° dans l'évidement 38. La pyramide aplatie 39 se dégage de ce fait des épaulements 40 et peut être extraite vers le bas hors de l'évidement 38. Le poteau intermédiaire 6 doit à cet effet également être tout d'abord désolidarisé à son extrémité inférieure hors du verrouillage, avec la colonne 7. L'épaisseur de la sphère aplatie 39 correspond à la largeur de l'évidement 38 dans le cylindre coulissant 37, tandis que la largeur est dimensionnée de façon que la pyramide aplatie 39 appuie par sa face inférieure sur les épaulements 40. Des enfoncements 42 dont la forme est adaptée à la face inférieure de la pyramide aplatie 39 se trouvent dans les épaulements 40, pour éviter toute rotation intempestive du poteau intermédiaire 6 lorsqu'il n'est pas verrouillé. C'est pourquoi le poteau intermédiaire 6 peut ensuite être tourné lorsque la pyramide aplatie 39 est extraite, avec sa face inférieure, hors des enfoncements 42.

Dans la réalisation des figures 8 et 9, il est garanti une possibilité de pivotement dans toutes les directions du poteau intermédiaire 6, une possibilité de déplacement en direction axiale du guidage cylindrique, ainsi qu'un décrochage du poteau intermédiaire 6.

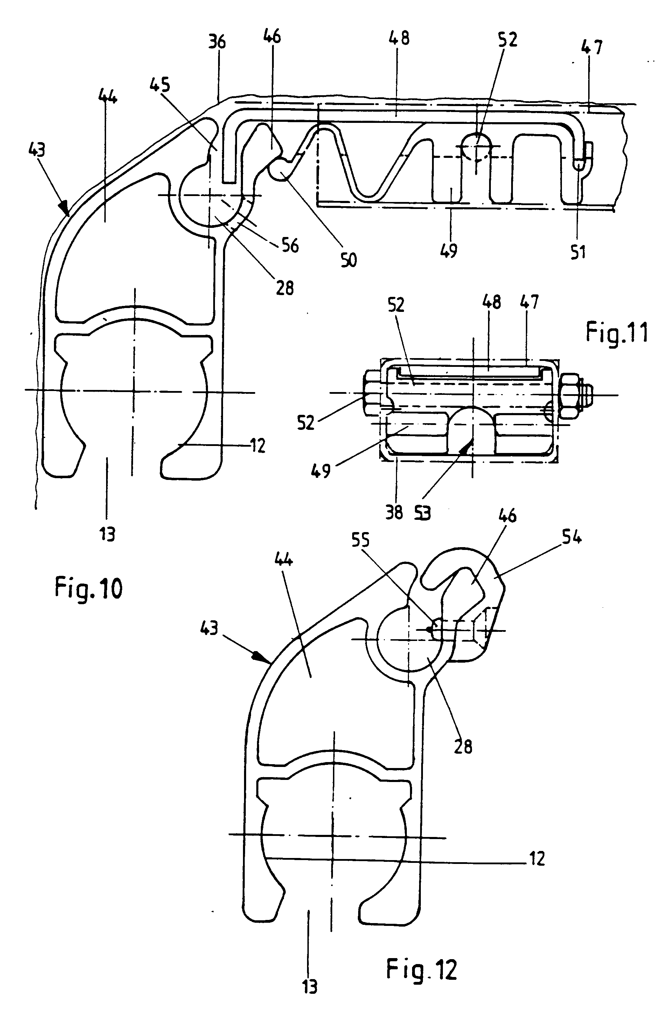

Les figures 10 et 11 représentent des détails d'une autre réalisation de l'arceau et du montant longitudinal 43. Ce montant longitudinal 43 présente également un guidage cylindrique 12 avec une fente 13 orientée vers le bas pour recevoir une tête située à l'extrémité d'un poteau intermédiaire. Une chambre creuse 44 sert aussi ici à obtenir un allégement du poids. Une fente élargie 45 vers un cylindre 28 court le long de l'arête supérieure du montant longitudinal 43. Le côté d'un crochet 48 en forme de U est accroché par l'intermédiaire d'une tête épaissie 46 d'une nervure formée par la fente 45. Ce crochet 48 en forme de U est introduit, avec une pièce de remplissage 49, dans l'extrémité d'un arceau réalisé sous la forme d'un profilé rectangulaire 47 et fixé à l'intérieur de ce dernier à l'aide d'un boulon 52 enfiché transversalement. L'autre côté du crochet 48 en forme de U est placé dans une gorge de réception 51 de la pièce de remplissage 49. Une languette élastique 50 sortant en saillie de l'extrémité du profilé rectangulaire 47 est réalisée d'une seule pièce avec la pièce de remplissage 49 et saisit à l'arrière la tête épaissie 50 de la nervure située sur la fente 45 et veille de ce fait à une assise sans battement du crochet 48 en forme de U dans la fente 45.

L'élargissement cylindrique 28 de la fente 45 sert à recevoir les dépôts de crasse, de façon à ce que l'accrochage du crochet 48 en forme de U ne soit pas empêché pour cette raison. Un perçage de purge d'eau 56 empêche toute accumulation d'humidité dans cette zone. Pour effectuer un contrôle des profils rectangulaires creux 31,47 des arceaux, les crochets 32,48 en forme de U et les pièces de remplissage 33,49 présentent des orifices de regard 53 permettant une vue à l'intérieur des profilés à arceaux 31,47.

Pour empêcher tout déplacement des arceaux en direction longitudinale des montants 43, des butées ayant la forme de pièces de serrage 54 et reliées à la nervure par des vis ou des rivets 55 sont enfichées sur les têtes épaissies de la nervure 46.

Dans le cas de structures très longues, il est avantageux de subdiviser les montants longitudinaux 4,24,43. Pour pouvoir les relier entre eux d'une manière rigide en flexion et en torsion, des tourillons 57,58 sont introduits dans le guidage cylindrique 12 et dans l'élargissement cylindrique 28 ou la gorge longitudinale cylindrique 66.

Des boulons transversaux 59 sont disposés dans le tourillon 57 et présentent à une extrémité une poignée faisant saillie dans la fente 13 et à l'autre extrémité un tourillon 61. Le tourillon 61 coopère avec un alésage transversal 62 situé dans le montant longitudinal 4,24,43 et peut être extrait à l'aide de la poignée 60 hors de l'alésage transversal 62 afin de déplacer le tourillon 57.

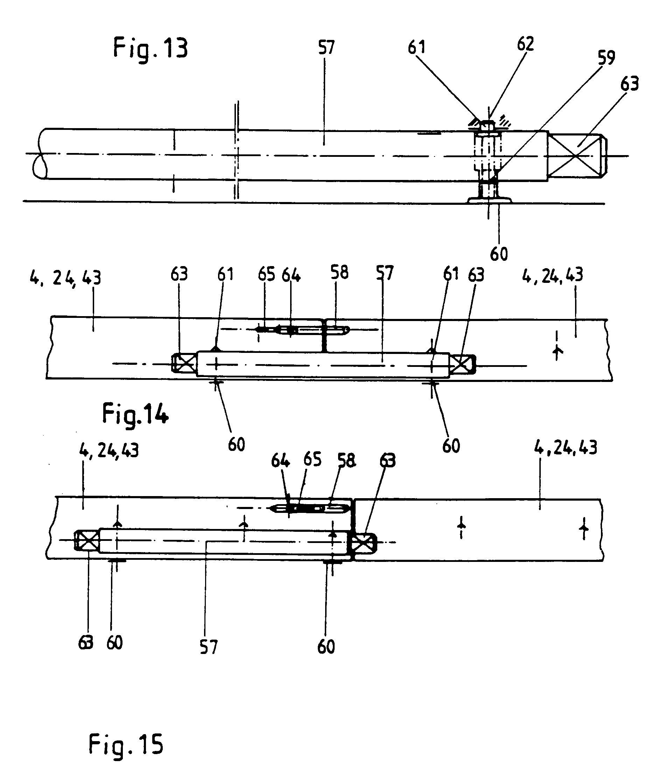

La figure 14 représente deux montants longitudinaux 4,24,43 reliés à l'aide des tourillons 57,58. Le tourillon 57 supporte les efforts e flexion et de traction, tandis que le tourillon 58 assure la transmission des efforts de compression des deux extrémités de montant séparées, pour diminuer les efforts en flexion pure s'exerçant dans le tourillon 57. On obtient de plus au moyen du tourillon 58 une sécurité en rotation pour les montants longitudinaux 4,24,43. Le tourillon 58 peut être déplacé axialement à l'aide d'une goupille transversale 64 s'engageant dans un trou oblong 65 pratiqué dans le montant longitudinal 2,24,43.

On voit sur la figure 15 que les tourillons 57,58 sont rétractés, de sorte qu'on peut appliquer ou enlever un montant longitudinal 4,24,43. Pour faciliter cette opération, les extrémités du tourillon 57 présentent des appendices aplatis 63 dont la largeur correspond à la largeur de la fente 13 pratiquée dans les montants longitudinaux. Le tourillon 57 peut être rétracté jusqu'à ce que seule l'appendice aplati 63 ressorte de l'extrémité du montant longitudinal 4,24,43. On peut alors soulever du tourillon 57 ou appliquer sur ce dernier, sans aucun problème, un montant longitudinal. Les tourillons 57 et 58 sont ensuite poussés dans les logements correspondants d'un montant longitudinal 4,24,43 et verrouillés, de façon que soit garanti une rigidité en flexion et en poussée, ainsi qu'une liaison bloquée en rotation.

## Revendications

1. Bâti de couverture pour une bâche de recouvrement ou une couverture de toit métallique d'une structure de véhicule utilitaire se composant de poteaux de coins et de montants longitudinaux et transversaux placés à leurs extrémités supérieures, d'au moins un poteau intermédiaire susceptible d'être déplacé et basculé à son extrémité supérieure dans un guidage d'au moins l'un des montants, d'éléments de serrage et d'entretoises verticales susceptibles d'être accrochés dans et décrochés du guidage, le guidage se composant d'un espace creux (12) s'étendant en direction longitudinale d'au moins l'un desdits montants (4,5,24,43) avec une fente (13) dans laquelle l'extrémité supérieure dudit au moins un poteau intermédiaire est susceptible de s'engager, caractérisé en ce que:
a) ledit espace creux (12) présente une section transversale sensiblement circulaire,
b) ladite fente (13) est ouverte vers le bas,
c) ledit au moins un poteau intermédiaire (6,8) présente à son extrémité supérieure :
- une tête (14), sous la forme d'une sphère aplatie dont la largeur est telle qu'elle peut traverser la fente (13) et qui est adaptée à la section transversale de l'espace creux de guidage (12), avec un faible jeu,
- ou des moyens de liaison à une tête (26, 37) montée coulissante le long de l'espace creux de guidage (12).

2. Bâti de couverture selon la revendication 1, caractérisé en ce que la liaison entre la tête (14) et le poteau intermédiaire (8) se compose d'une pièce d'encolure (15) et d'un rebord de vissage (16) contigu, à trous oblongs (17).

3. Bâti de couverture selon la revendication 2, caractérisé en ce que la pièce d'encolure (15) située entre la tête (14) et le rebord de vissage (16) est à double courbure.

4. Bâti de couverture selon la revendication 2 ou 3, caractérisé en ce que, dans la zone de la fente (13), la pièce d'encolure (15) est dimensionnée de façon à pouvoir tourner de 90°.

5. Bâti de couverture selon la revendication 1, caractérisé en ce que la tête se compose, à l'extrémité supérieure (29,41) du poteau intermédiaire (6), d'un cylindre coulissant (26,37) de diamètre correspondant au guidage (12) situé dans le montant (4,5,24,43).

6. Bâti de couverture selon la revendication 5, caractérisé en ce que le cylindre coulissant (26,37) présente, dans la zone tournée vers l'espace creux (12) situé dans le montant (4,5,24,43), un évidement (27,38) dans lequel est fixée l'extrémité supérieure (29,41) du poteau intermédiaire (6).

7. Bâti de couverture selon la revendication 6, caractérisé en ce que l'extrémité supérieure (29,41) du montant intermédiaire (6) situé dans l'évidement (27,38) est disposée dans le cylindre coulissant (26,37) de manière susceptible de pivoter.

8. Bâti de couverture selon la revendication 7, caractérisé en ce qu'un tourillon (30) traverse transversalement le cylindre coulissant (26) dans la zone de l'évidement (27) et l'extrémité supérieure (29) du poteau intermédiaire (6) qui est disposée sur le cylindre.

9. Bâti de couverture selon la revendication 7, caractérisé en ce que l'extrémité supérieure (41) du poteau intermédiaire (6) présente la forme d'un cône aplati ou d'une pyramide aplatie (39) et que les aplatissements s'étendent transversalement par rapport à l'axe du cylindre coulissant.

10. Bâti de couverture selon la revendication 9, caractérisé en ce que l'évidement (38) s'élargit dans la zone du cône aplati ou de la pyramide aplatie (39), transversalement à l'axe du cylindre coulissant et présente des épaulements (40) en vue de saisir par le dessous l'extrémité supérieure (41) du poteau intermédiaire (6).

11. Bâti de couverture selon la revendication 10, caractérisé en ce que le cône aplati (39) ou la pyramide aplatie est relié au poteau intermédiaire (6) à l'aide d'une pièce de transition (41) dont l'épaisseur mesurée transversalement à l'axe du cylindre coulissant, tout comme l'épaisseur aplatie du cône (39) ou de la pyramide, observée perpendiculairement, correspond à peu près à la largeur de l'évidement (38).

12. Bâti de couverture selon la revendication 11, caractérisé en ce que les épaulements (40) de l'évidement qui saisissent par le dessous le cône (39) ou la pyramide présentent des enfoncements (42) adaptés à la face inférieure du cône (39) ou de la pyramide.

13. Bâti de couverture selon une ou plusieurs des revendications 1 à 12, caractérisé en ce que la fente (13) située dans le montant (4,5,24,43) est plus large que l'extrémité (15,29,41) du poteau intermédiaire (6,8) qui traverse la fente (13).

14. Bâti de couverture selon la revendication 13, caractérisé en ce que les arêtes latérales de la fente (13) sont disposées de manière asymétrique par rapport à l'axe longitudinal du guidage cylindrique (12) situé dans le montant (4,5,24,43).

15. Bâti de couverture selon une ou plusieurs des revendication 1 à 14,caractérisé en ce que l'extrémité inférieure du poteau intermédiaire (8) présente un verrouillage (19,20,21).

16. Bâti de couverture selon la revendication 15, caractérisé en ce que le verrouillage se compose d'un étrier (19) situé à l'extrémité inférieure du poteau intermédiaire (8) et d'un ergot de verrouillage (20) s'engageant sur l'étrier (19).

17. Bâti de couverture selon la revendication 16, caractérisé en ce que l'ergot de verrouillage (20) présente un ressort d'encliquetage (21) saisissant l'étrier (20).

18. Bâti de couverture selon la revendication 17, caractérisé en ce que l'ergot de verrouillage (20) et le ressort d'encliquetage (21) présentent une rampe d'introduction (22) destinée à l'étrier arrondi (19).

19. Bâti de couverture selon une ou plusieurs des revendications 1 à 18, caractérisé en ce que le montant (24) présente à son arête supérieure des logements (34,46) destinés à accrocher des arceaux (31,32,33,47,48,49).

20. Bâti de couverture selon la revendication 19, caractérisé en ce que le logement se compose d'une fente (45).

21. Bâti de couverture selon la revendication 20, caractérisé en ce que la fente (45) s'élargit en allant vers l'intérieur du montant (28).

22. Bâti de couverture selon une ou plusieurs des revendications 1 à 21, caractérisé en ce que les poteaux (3,6,7,8) et/ou les montants (4,5,24,43) se composent d'aluminium extrudé.

23. Bâti de couverture selon une ou plusieurs des revendications 1 à 21, caractérisé en ce que les poteaux (3,6,7,8) et/ou les montants (4,5,24,43) se composent de matière plastique renforcée par des fibres.

24. Bâti de couverture selon une ou plusieurs des revendications 1 à 22, caractérisé en ce que les arceaux se composent d'un profilé creux rectangulaire (31,47) dans les extrémités duquel sont fixés un crochet en forme de U (32,48) et une pièce de remplissage (33,49).

25. Bâti de couverture selon la revendication 24, caractérisé en ce que la pièce de remplissage (49) présente une languette élastique (50) agissant sur le crochet (48) par le dessous et dépassant du profilé à arceau (47) et une gorge de réception (51) destinée au côté du crochet (48) qui est fixé dans le profilé à arceau (47).

26. Bâti de couverture selon la revendication 25, caractérisé en ce que l'arceau (31) bloque le ressort (35) à l'aide de son crochet en forme de U (32).

27. Bâti de couverture selon une ou plusieurs des revendications 24 à 26, caractérisé en ce que la pièce de remplissage (33,49) avec le crochet (32,48) est fixée dans le profilé à arceau (31,47) à l'aide d'un boulon (52) s'étendant transversalement.

28. Bâti de couverture selon une ou plusieurs des revendications 24 à 27, caractérisé en ce que le crochet (32,48) et la pièce de remplissage (33,39) présentent un orifice de regard (53) vers l'intérieur du profilé à arceau (31,47).

29. Bâti de couverture selon une ou plusieurs des revendications 24 à 28, caractérisé en ce que les montants (43) présentent dans les fentes (45), sur l'arête supérieure, des butées (54) destinées à positionner les arceaux (47,48,49).

30. Bâti de couverture selon la revendication 29, caractérisé en ce que les butées se composent de pièces de serrage (54) enfichées sur une nervure (46) de la fente (45) et vissées ou rivetées.

31. Bâti de couverture selon une ou plusieurs des revendications 21 à 30, caractérisé en ce que plusieurs montants (24,43) sont assemblés à l'aide de tourillons (57,58) enfichables dans le guidage cylindrique (12) et dans la fente (28) s'élargissant ou dans le segment de cercle (66).

32. Bâti de couverture selon la revendication 31, caractérisé en ce que le tourillon (57) enfichable dans le guidage cylindrique (12) présente à chacune de ses extrémités un boulon transversal élastique (59) dont l'une des extrémités présente une poignée (60) accessible à travers la fente (13) située sur le guidage cylindrique (12) et dont l'autre extrémité (61) coopère avec un alésage transversal (62) situé dans la paroi du guidage cylindrique (12).

33. Bâti de couverture selon la revendication 31 ou 32, caractérisé en ce que le tourillon (57) enfichable dans le guidage cylindrique (12) présente à ses extrémités des appendices aplatis (63) de largeur légèrement inférieure à celle de la fente (13).

34. Bâti de couverture selon une ou plusieurs des revendications 31 à 33, caractérisé en ce que le tourillon (58) enfichable dans la fente s'élargissant (28) ou dans le segment de cercle (66) est susceptible de se déplacer, à l'aide d'une goupille transversale (64), dans un trou oblong (65) pratiqué dans le montant (24,43).

35. Bâti de couverture selon la revendication 34, caractérisé en ce que les tourillons enfichables (57,58) et deux montants (24,43) assemblés sont mutuellement bloqués en rotation axiale.

36. Bâti de couverture selon la revendication 35, caractérisé en ce que le montant (24,43) présente une pente (67) supérieure tournée vers l'extérieur du véhicule.

37. Bâti de couverture selon la revendication 35 ou 36, caractérisé en ce que le poteau intermédiaire (6), avec son extrémité supérieure (29,41), empêche tout basculement du montant (24,43) par rapport à l'axe du véhicule, par l'intermédiaire de la surface d'appui (68).

38. Bâti de couverture selon la revendication 37, caractérisé en ce que le poteau intermédiaire (6,7,8) empêche tout déplacement de glissement du montant (24,43), à l'aide d'une butée (69), lorsque la structure est à l'état verrouillée.

## Claims

1. Covering frame for a covering tarpaulin or a metal roof covering of a commercial vehicle structure composed of corner poles and longitudinal and transverse posts located at their upper ends, of at least one intermediate pole able to be moved and tilted at its upper end in a guide of at least one of the posts, clamping members and vertical spacer members able to be attached in and detached from the guide, the guide being composed of a hollow space (12) extending in the longitudinal direction of at least one of said posts (4, 5, 24, 43) with a slot (13) in which the upper end of said at least one intermediate pole is able to engage, characterised in that:
a) said hollow space (12) has a substantially circular cross-section,
b) said slot (13) is open on the under side,
c) said at least one intermediate pole (6, 8) comprises at its upper end:
- a head (14), in the form of a flattened sphere whereof the width is such that it is able to pass through the slot (13) and which is adapted to the cross-section of the hollow guide space (12), with a slight clearance,
- or means for connection to a head (26, 37) mounted to slide along the hollow guide space (12).

2. Covering frame according to Claim 1, characterised in that the connection between the head (14) and the intermediate pole (8) is composed of a neck part (15) and an adjacent screwing flange (16), comprising oblong holes (17).

3. Covering frame according to Claim 2, characterised in that the neck member (15) situated between the head (14) and the screwing flange (16) has a double curvature.

4. Covering frame according to Claim 2 or 3, characterised in that, in the area of the slot (13), the neck member (15) has dimensions such that it is able to rotate through 90°.

5. Covering frame according to Claim 1, characterised in that the head is composed, at the upper end (29, 41) of the intermediate pole (6), of a sliding cylinder (26, 37) of diameter corresponding to the guide (12) situated in the post (4, 5, 24, 43).

6. Covering frame according to Claim 5, characterised in that the sliding cylinder (26, 37) comprises, in the area turned towards the hollow space (12) situated in the post (4, 5, 24, 43), a recess (27, 38) in which the upper end (29, 41) of the intermediate pole (6) is fixed.

7. Covering frame according to Claim 6, characterised in that the upper end (29, 41) of the intermediate post (6) situated in the recess (27, 38) is disposed in the sliding cylinder (26, 37) in a manner such that it is able to pivot.

8. Covering frame according to Claim 7, characterised in that a journal (30) passes transversely through the sliding cylinder (26) in the region of the recess (27) and the upper end (29) of the intermediate pole (6) which is disposed on the cylinder.

9. Covering frame according to Claim 7, characterised in that the upper end (41) of the intermediate pole (6) has the shape of a flattened cone or of a flattened pyramid (39) and that the flattened portions extend transversely with respect to the axis of the sliding cylinder.

10. Covering frame according to Claim 9, characterised in that the recess (38) widens out in the area of the flattened cone or of the flattened pyramid (39), transversely with respect to the axis of the sliding cylinder and comprises shoulders (40) with a view to gripping from below the upper end (41) of the intermediate post (6).

11. Covering frame according to Claim 10, characterised in that the flattened cone (39) or the flattened pyramid is connected to the intermediate pole (6) by means of a transition member (41) whereof the thickness measured transversely to the axis of the sliding cylinder, like the flattened thickness of the cone (39) or of the pyramid, observed perpendicularly, corresponds roughly to the width of the recess (38).

12. Covering frame according to Claim 11, characterised in that the shoulders (40) of the recess which grip below the cone (39) or the pyramid comprise cavities (42) adapted to the lower side of the cone (39) or of the pyramid.

13. Covering frame according to one or more of Claims 1 to 12, characterised in that the slot (13) situated in the post (4, 5, 24, 43) is wider than the end (15, 29, 41) of the intermediate pole (6, 8) which passes through the slot (13).

14. Covering frame according to Claim 13, characterised in that the side edges of the slot (13) are disposed asymmetrically with respect to the longitudinal axis of the cylindrical guide (12) situated in the post (4, 5, 24, 43).

15. Covering frame according to one or more of Claims 1 to 14, characterised in that the lower end of the intermediate post (8) comprises a locking arrangement (19, 20, 21).

16. Covering frame according to Claim 15, characterised in that the locking arrangement is composed of a stirrup-piece (19) situated at the lower end of the intermediate post (8) and of a locking lug (20) engaging on the stirrup-piece (19).

17. Covering frame according to Claim 16, characterised in that the locking lug (20) has a snap-action spring (21) gripping the stirrup-piece (20).

18. Covering frame according to Claim 17, characterised in that the locking lug (20) and the snap-action spring (21) comprise an introduction ramp (22) intended for the rounded stirrup-piece (19).

19. Covering frame according to one or more of Claims 1 to 18, characterised in that the post (24) comprises at its upper edge housings (34, 46) intended to attach arches (31, 32, 33, 47, 48, 49).

20. Covering frame according to Claim 19, characterised in that the housing is composed of a slot (45).

21. Covering frame according to Claim 20, characterised in that the slot (45) widens out as it extends towards the inside of the post (28).

22. Covering frame according to one or more of Claims 1 to 21, characterised in that the poles (3, 6, 7, 8) and/or the posts (4, 5, 24, 43) are composed of extruded aluminium.

23. Covering frame according to one or more of Claims 1 to 21, characterised in that the poles (3, 6, 7, 8) and/or the posts (4, 5, 24, 43) are composed of plastics material reinforced by fibres.

24. Covering frame according to one or more of Claims 1 to 22, characterised in that the arches are composed of a rectangular hollow section (31, 47) fixed in the ends of which are a U-shaped hook (32, 48) and a filling piece (33, 49).

25. Covering frame according to Claim 24, characterised in that the filling member (49) has a resilient tongue (50) acting on the hook (48) from below and projecting from the arch section (47) and a receiving groove (51) intended for the side of the hook (48) which is fixed in the arch section (47).

26. Covering frame according to Claim 25, characterised in that the arch (31) locks the spring (35) by means of its U-shaped hook (32).

27. Covering frame according to one or more of Claims 24 to 26, characterised in that the filling member (33, 49) with the hook (32, 48) is fixed in the arch section (31, 47) by means of a bolt (52) extending transversely.

28. Covering frame according to one or more of Claims 24 to 27, characterised in that the hook (32, 48) and the filling member (33, 39) comprise an inspection orifice (53) towards the inside of the arch section (31, 47).

29. Covering frame according to one or more of Claims 24 to 28, characterised in that the posts (43) comprise in the slots (45), on the upper edge, abutments (54) intended to position the arches (47, 48, 49).

30. Covering frame according to Claim 29, characterised in that the abutments are composed of clamping members (54) plugged onto a rib (46) of the slot (45) and screwed or riveted.

31. Covering frame according to one or more of Claims 21 to 30, characterised in that several posts (24, 43) are assembled by means of journals (57, 58) able to be plugged into the cylindrical guide (12) and into the slot (28) which widens out or into the segment of a circle (66).

32. Covering frame according to Claim 31, characterised in that the journal (57) which can be plugged into the cylindrical guide (12) comprises at each of its ends a transverse resilient bolt (59) whereof one of the ends comprises a handle (60) accessible through the slot (13) situated on the cylindrical guide (12) and whereof the other end (61) cooperates with a transverse bore (62) situated in the wall of the cylindrical guide (12).

33. Covering frame according to Claim 31 or 32, characterised in that the journal (57) which can be plugged into the cylindrical guide (12) comprises at its ends flattened appendages (63) of width slightly less than that of the slot (13).

34. Covering frame according to one or more of Claims 31 to 33, characterised in that the journal (58) which can be plugged into the slot (28) which widens out or in the segment of a circle (66) is able to move, by means of a transverse cotter-pin (64), in an oblong hole (65) provided in the post (24, 43).

35. Covering frame according to Claim 34, characterised in that the journals (57, 58) which can be plugged in and two assembled posts (24, 43) are mutually prevented from axial rotation.

36. Covering frame according to Claim 35, characterised in that the post (24, 43) has an upper slope (67) directed towards the outside of the vehicle.

37. Covering frame according to Claim 35 or 36, characterised in that the intermediate pole (6), with its upper end (29, 41), prevents any tilting of the post (24, 43) with respect to the axis of the vehicle, through the intermediary of the support surface (68).

38. Covering frame according to Claim 37, characterised in that the intermediate pole (6, 7, 8) prevents any sliding movement of the post (24, 43), by means of an abutment (69), when the structure is in the locked state.

## Patentansprüche

1. Gestell zur Abdeckung eines Lkw-Aufbaues mittels Abdeckplane oder Metallabdeckung, das aus Eckpfosten und Längs- und Querträgern besteht, die am oberen Ende der Eckpfosten angebracht sind, mit mindestens einem Zwischenpfosten, der mit seinem oberen Ende in einer Führung von mindestens einem der Träger verschoben und abgewinkelt werden kann, sowie aus Befestigungsteilen und senkrechten Zwischenstücken, die in die Führung eingehängt und aus ihr gelöst werden können, wobei die Führung aus einem Hohlraum (12) besteht, der sich in Längsrichtung von mindestens einem der Träger (4,5,24,43) erstreckt und mit einem Schlitz (13) versehen ist, in den zumindest ein Zwischenpfosten mit seinem oberen Ende eingreifen kann, dadurch gekennzeichnet, dass:
a) der Hohlraum (12) einen im wesentlichen runden Querschnitt aufweist,
b) der Schlitz (13) sich nach unten öffnet,
c) zumindest einer der Zwischenpfosten (6,8) an seinem oberen Ende:
- einen Kopf (14) in Form einer abgeflachten Kugel trägt, die so breit ist, dass sie durch den Schlitz (13) geht und mit einem geringen Spiel an den Querschnitt des Hohlraumes (12) angepasst ist,
- oder Verbindungsteile für einen Kopf (26, 37), der längsverschieblich in dem Hohlraum (12) angebracht ist.

2. Gestell zur Abdeckung eines Lkw-Aufbaues gemäss Anspruch 1, dadurch gekennzeichnet, dass die Verbindung zwischen dem Kopf (14) und dem Zwischenpfosten (8) aus einem gekröpften Teil (15) mit einer Befestigungslasche (16) besteht, die mit länglichen Löchern (17) versehen ist.

3. Gestell zur Abdeckung eines Lkw-Aufbaues gemäss Anspruch 2, dadurch gekennzeichnet, dass das Teil (15) zwischen dem Kopf (14) und der Befestigungslasche (16) doppelt gekröpft ist.

4. Gestell zur Abdeckung eines Lkw-Aufbaues gemäss Anspruch 2 oder 3, dadurch gekennzeichnet, dass das gekröpfte Teil (15) im Bereich des Schlitzes (13) so dimensioniert ist, dass es um 90° drehbar ist.

5. Gestell zur Abdeckung eines Lkw-Aufbaues gemäss Anspruch 1, dadurch gekennzeichnet, dass der Kopf am oberen Ende (29,41) des Zwischenpfostens (6) aus einem zylindrischen Gleitstück (26,37) besteht, dessen Durchmesser der Führung (12) in dem Träger (4,5,24,43) entspricht.

6. Gestell zur Abdeckung eines Lkw-Aufbaues gemäss Anspruch 5, dadurch gekennzeichnet, dass das zylindrische Gleitstück (26,37) in dem dem Hohlraum (12) im Träger (4,5,24,43) zugewandten Bereich eine Aussparung (27,38) aufweist, in der das obere Ende (29,41) des Zwischenpfostens (6) befestigt ist.

7. Gestell zur Abdeckung eines Lkw-Aufbaues gemäss Anspruch 6, dadurch gekennzeichnet, dass das obere Ende (29,41) des Zwischenpfostens (6) in der Aussparung (27,38) des zylindrischen Gleitstückes (26,37) schwenkbar gelagert ist.

8. Gestell zur Abdeckung eines Lkw-Aufbaues gemäss Anspruch 7, dadurch gekennzeichnet, dass ein Zapfen (30) im Bereich der Ausparung (27) das zylindrische Gleitstück (26) und das obere Ende (29) des Zwischenpfostens (6) durchsetzt, das auf dem Zylinder angeordnet ist.

9. Gestell zur Abdeckung eines Lkw-Aufbaues gemäss Anspruch 7, dadurch gekennzeichnet, dass das obere Ende (41) des Zwischenpfostens (6) die Form eines abgeflachten Kegels oder einer abgeflachten Pyramide (39) hat, und dass die Abflachungen sich quer zur Achse des zylindrischen Gleitstückes erstrecken.

10. Gestell zur Abdeckung eines Lkw-Aufbaues gemäss Anspruch 9, dadurch gekennzeichnet, dass sich die Aussparung (38) im Bereich des abgeflachten Kegels oder der abgeflachten Pyramide (39) quer zur Achse des zylindrischen Gleitstückes erweitert und Vorsprünge (40) aufweist, die von unten am oberen Ende (41) des Zwischenpfostens (6) anliegen.

11. Gestell zur Abdeckung eines Lkw-Aufbaues gemäss Anspruch 10, dadurch gekennzeichnet, dass der abgeflachte Kegel oder die abgeflachte Pyramide (39) mit dem Zwischenpfosten (6) durch ein Übergangsstück (41) verbunden ist, dessen quer zur Achse des zylindrischen Gleitstückes gemessene Stärke wie auch die senkrecht ermittelte Höhe des Kegels oder der Pyramide (39) nahezu der Breite der Aussparung (38) entspricht.

12. Gestell zur Abdeckung eines Lkw-Aufbaues gemäss Anspruch 11, dadurch gekennzeichnet, dass die Vorsprünge (40), die von unten an dem Kegel oder der Pyramide (39) anliegen, Vertiefungen (42) aufweisen, die der Unterseite des Kegels oder der Pyramide (39) angepasst sind.

13. Gestell zur Abdeckung eines Lkw-Aufbaues gemäss einem oder mehrerer der Ansprüche 1 bis 12, dadurch gekennzeichnet, dass der Schlitz (13) im Träger (4,5,24,43) breiter als das Ende (15,29,41) des Zwischenpfostens (6,8) ist, der den Schlitz (13) durchsetzt.

14. Gestell zur Abdeckung eines Lkw-Aufbaues gemäss Anspruch 13, dadurch gekennzeichnet, dass die Kanten des Schlitzes (13) gegenüber der Längsachse der zylindrischen in dem Träger (4,5,24,43) vorgesehenen Führung (12) asymetrisch angeordnet sind.

15. Gestell zur Abdeckung eines Lkw-Aufbaues gemäss einem oder mehrerer der Ansprüche 1 bis 14, dadurch gekennzeichnet, dass das untere Ende des Zwischenpfostens (8) mit einer Halterung (19,20,21) versehen ist.

16. Gestell zur Abdeckung eines Lkw-Aufbaues gemäss Anspruch 15, dadurch gekennzeichnet, dass die Halterung aus einem am unteren Ende des Zwischenpfostens (8) angeordneten Bügel (19) und einem Nocken (20) besteht, der über den Bügel (19) greift.

17. Gestell zur Abdeckung eines Lkw-Aufbaues gemäss Anspruch 16, dadurch gekennzeichnet, dass der Nocken (20) mit einer Feder (21) versehen ist, die am Bügel (19) anliegt.

18. Gestell zur Abdeckung eines Lkw-Aufbaues gemäss Anspruch 17, dadurch gekennzeichnet, dass der Nocken (20) und die Feder (21) eine Schräge (22) für den abgerundeten Bügel (19) aufweisen.

19. Gestell zur Abdeckung eines Lkw-Aufbaues gemäss einem oder mehrerer der Ansprüche 1 bis 18, dadurch gekennzeichnet, dass der Träger (24) an seinem oberen Rand Halterungen (34,46) zur Aufnahme von Klammern (31,32,33,47,48,49) aufweist.

20. Gestell zur Abdeckung eines Lkw-Aufbaues gemäss Anspruch 19, dadurch gekennzeichnet, dass die Halterung einen Schlitz (45) aufweist.

21. Gestell zur Abdeckung eines Lkw-Aufbaues gemäss Anspruch 20, dadurch gekennzeichnet, dass sich der Schlitz (45) zum Inneren des Trägers (28) hin erweitert.

22. Gestell zur Abdeckung eines Lkw-Aufbaues gemäss einem oder mehrerer der Ansprüche 1 bis 21, dadurch gekennzeichnet, dass die Pfosten (3,6,7,8) und/oder die Träger (4,5,24,43) aus stranggepresstem Aluminium bestehen.

23. Gestell zur Abdeckung eines Lkw-Aufbaues gemäss einem oder mehrerer der Ansprüche 1 bis 21, dadurch gekennzeichnet, dass die Pfosten (3,6,7,8) und/oder die Träger (4,5,24,43) aus faserverstärktem Kunststoff bestehen.

24. Gestell zur Abdeckung eines Lkw-Aufbaues gemäss einem oder mehrerer der Ansprüche 1 bis 22, dadurch gekennzeichnet, dass die Bügel aus einem rechteckigen Hohlprofil (31,47) bestehen, an dessen Enden eine U-förmige Klammer (32,48) und ein Einsatz (33,49) befestigt sind.

25. Gestell zur Abdeckung eines Lkw-Aufbaues gemäss Anspruch 24, dadurch gekennzeichnet, dass der Einsatz (49) eine elastische Lasche (50), die von unten auf die Klammer (48) wirkt und aus dem Profil (47) heraussragt, sowie eine Kehle (51) zur Aufnahme für das in dem Profil (47) befestigte Teil der Klammer (48), umfasst.

26. Gestell zur Abdeckung eines Lkw-Aufbaues gemäss Anspruch 25, dadurch gekennzeichnet, dass der Bügel (31) die Feder (35) mit Hilfe seiner U-förmigen Klammer (32) blockiert.

27. Gestell zur Abdeckung eines Lkw-Aufbaues gemäss einem oder mehrerer der Ansprüche 24 bis 26, dadurch gekennzeichnet, dass der Einsatz (33,49) mit der Klammer (32,48) in dem Profil (31,47) mit Hilfe eines quer verlaufenden Bolzens (52) befestigt ist.

28. Gestell zur Abdeckung eines Lkw-Aufbaues gemäss einem oder mehrerer der Ansprüche 24 bis 27, dadurch gekennzeichnet, dass die Klammer (32,48) und der Einsatz (33,49) eine ins Innere des Profiles (31,47) weisende Öffnung (53) aufweisen.

29. Gestell zur Abdeckung eines Lkw-Aufbaues gemäss einem oder mehrerer der Ansprüche 24 bis 28, dadurch gekennzeichnet, dass die Träger (43) am oberen Rand der Schlitze (45) Anschläge (54) zur Positionierung der Profile (47,48,49) aufweisen.

30. Gestell zur Abdeckung eines Lkw-Aufbaues gemäss Anspruch 29, dadurch gekennzeichnet, dass die Anschläge aus auf eine Rippe (46) des Schlitzes (45) aufgesteckten und damit verschraubten oder vernieteten Klemmstücken (54) bestehen.

31. Gestell zur Abdeckung eines Lkw-Aufbaues gemäss einem oder mehrerer der Ansprücke 21 bis 30, dadurch gekennzeichnet, dass mehrere Träger (24,43) miteinander mit Hilfe von Zapfen (57,58) verbunden sind, die in die zylindrische Führung (12) und den sich erweiternden Schlitz (28) oder das Kreissegment (66) einsteckbar sind.

32. Gestell zur Abdeckung eines Lkw-Aufbaues gemäss Anspruch 31, dadurch gekennzeichnet, dass der in die zylindrische Führung (12) einsteckbare Zapfen (57) an jedem seiner Enden einen elastischen Querbolzen (59) trägt, dessen eines Ende mit einem durch den auf der zylindrischen Führung (12) vorgesehenen Schlitz (13) zugänglichen Handgriff (60) versehen ist, und dessen anderes Ende (61) in eine Querbohrung (62) eingreift, die in der Wandung der zylindrischen Führung (12) vorgesehen ist.

33. Gestell zur Abdeckung eines Lkw-Aufbaues gemäss Anspruch 31 oder 32, dadurch gekennzeichnet, dass der in die zylindrische Führung (12) einsteckbare Zapfen (57) an seinen Enden abgeflachte Fortsätze (63) trägt, die etwas schmaler als der Schlitz (13) sind.

34. Gestell zur Abdeckung eines Lkw-Aufbaues gemäss einem oder mehrerer der Ansprüche 31 bis 33, dadurch gekennzeichnet, dass der in den sich erweiternden Schlitz (28) oder das Kreissegment (66) einsteckbare Zapfen (58) mit Hilfe eines Querstiftes (64) in einem Langloch im Träger (24,43) verschiebbar ist.

35. Gestell zur Abdeckung eines Lkw-Aufbaues gemäss Anspruch 34, dadurch gekennzeichnet, dass die einsteckbaren Zapfen (57,58) und zwei miteinander verbundene Träger (24,43) wechselseitig gegen axiale Drehung blockiert sind.

36. Gestell zur Abdeckung eines Lkw-Aufbaues gemäss Anspruch 35, dadurch gekennzeichnet, dass der Träger (24,43) oben eine nach aussen weisende Schräge (67) aufweist.

37. Gestell zur Abdeckung eines Lkw-Aufbaues gemäss Anspruch 35 oder 36, dadurch gekennzeichnet, dass der Zwischenpfosten (6) mit seinem oberen Ende (29,41) jede Schwenkbewegung des Trägers (24,43) gegenüber der Fahrzeugachse über die Stützfläche (68) verhindert.

38. Gestell zur Abdeckung eines Lkw-Aufbaues gemäss Anspruch 37, dadurch gekennzeichnet, dass der Zwischenpfosten (6,7,8) jede Verschiebung des Trägers (24,43) mit Hilfe eines Anschlages (69) verhindert, wenn die Struktur verriegelt ist.
